# EUROPEAN PATENT APPLICATION

(11) **EP 3 805 798 A1**
(43) Date of publication of application: **14.04.2021**
(21) Application number: 19202530.2
(22) Date of filing: 10.10.2019
(51) Int. Cl.: G01S 19/21, G01S 19/27

(54) **IDENTIFYING SECOND GNSS NAVIGATION DATA AS POTENTIALLY MANIPULATED OR AS TRUSTWORTHY AT LEAST PARTIALLY BASED ON FIRST GNSS NAVIGATION DATA**

(71) Applicant: HERE Global B.V., 5611 ZT Eindhoven (NL)
(72) Inventor: SÖDERHOLM, Stefan, 02780 Espoo (FI); SYRJÄRINNE, Jari Tapani, 33700 Tampere (FI); KUISMANEN, Saara, 33200 Tampere (FI)
(74) Representative: Cohausz & Florack

(57) **Abstract**

It is inter-alia disclosed a method performed by a mobile device (2), the method comprising:
- receiving (301) first GNSS navigation data containing at least one of ephemeris data of at least one GNSS satellite (101-104) and clock data of the at least one GNSS satellite (101-104) for a first time period;
- determining (302) extended first GNSS navigation data at least partially based on the first GNSS navigation data, wherein the extended first GNSS navigation data contain at least one of ephemeris data of the at least one GNSS satellite (101-104) and clock data of the at least one GNSS satellite (101-104) for an extension time period;
- receiving (303) second GNSS navigation data containing at least one of ephemeris data of the at least one GNSS satellite (101-104) and clock data of the at least one GNSS satellite (101-104) for a second time period;
- determining (304), at least partially based on the extended first GNSS navigation data, whether or not the second GNSS navigation data are potentially manipulated.

## Description

The invention relates to the field of GNSS based radio positioning and more specifically to identifying second GNSS navigation data as potentially manipulated or as trustworthy at least partially based on previously received first GNSS navigation data.

### BACKGROUND

Satellite signal based positioning technologies are based on a Global Navigation Satellite System (GNSS), such as the Global Positioning System (GPS) and/or the Galileo system.

In a GNSS system, each GNSS satellite orbiting the Earth periodically broadcasts respective GNSS navigation data. For example, the respective navigation data may be part of a message conveyed by a GNSS signal broadcasted by the respective GNSS satellite. The respective navigation data may for example contain ephemeris data that enable determining an orbital position of the respective GNSS satellite at any given time for a limited time period. Moreover, the respective navigation data may for example contain clock data that enable determining a deviation of a clock of the respective GNSS satellite from a GNSS system time at any given time for a limited time period. A mobile device observing GNSS signals of at least four GNSS satellites may estimate its position based on the observed GNSS signals and valid navigation data of these at least four GNSS satellits. Since the navigation data are crucial for position estimating and only valid for a limited time period, the navigation data need to be updated at regular intervals.

GNSS systems provide open services for civilian and unauthorized users. Typically, GNSS signals broadcasted for such uses are unencrypted and cannot be authenticated which make them vulnerable to manipulation techniques like GNSS signal spoofing. Spoofing of GNSS signals may be considered to relate to a deliberate attempt to deceive a mobile device by falsifying GNSS signals structured to resemble one or more authentic GNSS signals. This may for example be done by transmitting (e.g. broadcasting) one or more manipulated GNSS signals (e.g. a GNSS signal conveying a message containing manipulated navigation data) or by retransmitting (e.g. rebroadcasting) authentic GNSS signals captured previousy (e.g. a GNSS signal conveying a message containing navigation data which are no longer valid). Such manipulation techniques are a threat to business models which rely on trustworthy positioning like car sharing services.

### SUMMARY OF SOME EMBODIMENTS OF THE INVENTION

It is inter-alia an object of the present invention to improve satellite signal based positioning technologies by mitigating the threat associated with such manipulation techniques.

According to an exemplary aspect of the invention, a method performed by a mobile device is disclosed, wherein the method comprises:
- receiving first GNSS navigation data containing at least one of ephemeris data of at least one GNSS satellite and clock data of the at least one GNSS satellite for a first time period;
- determining extended first GNSS navigation data at least partially based on the first GNSS navigation data, wherein the extended first GNSS navigation data contain at least one of ephemeris data of the at least one GNSS satellite and clock data of the at least one GNSS satellite for an extension time period;
- receiving second GNSS navigation data containing at least one of ephemeris data of the at least one GNSS satellite and clock data of the at least one GNSS satellite for a second time period;
- determining, at least partially based on the extended first GNSS navigation data, whether or not the second GNSS navigation data are potentially manipulated.

The disclosed method may serve for identifying the second GNSS navigation data as potentially manipulated or as trustworthy (i.e. to be not potentially manipulated) at least partially based on the previously received first GNSS navigation data.

The mobile device may be a smart home device, a smartphone, a tablet computer, a notebook computer, a smart watch, and a smart band.

For example, the disclosed method may be part of a GNSS based positioning solution. The mobile device may be enabled for or support such a GNSS based positioning solution like the Galileo system or the GPS system. This may be understood to mean that the mobile device is configured to estimate its position (e.g. determine a position estimate of its position) at least partially based on one or more GNSS signals (e.g. GNSS signals reveived from at least four GNSS satellites) observed at this position and GNSS navigation data like the first or second GNSS navigation data (e.g. GNSS navigation data of the at least four GNSS satellites). To this end, the mobile device may be configured for (e.g. periodally or repeatedly or continuously) scanning for GNSS signals observable at the position of the mobile device.

As disclosed above, each GNSS satellite of a GNSS based position soulition orbiting the Earth may (e.g. periodically or repeatedly or continously) broadcast respective GNSS navigation data. For example, each GNSS satellite of a GNSS based position soulition orbiting the Earth may (e.g. periodically or repeatedly or continuously) broadcast a respective GNSS signal conveying a message containing the GNSS navigation data of the respective satellite (i.e. the navigation data are part of the message). Receiving GNSS navigation data (e.g. at least one of the first or second navigation data) may accordingly be understood to mean that the GNSS navigation data are received from a GNSS satellite or a spoofing device, for example by receiving a GNSS signal conveying a message containing the GNSS navigation data from the GNSS satellite or the spoofing device. An example of such a message is a Galileo F/NAV message as specified by the Galileo open service specifications that are presently available in the Internet under https://www.gsc-europa.eu/electronic-library/programme-reference-documents#open. Another example for such a message is a GPS navigation message as specified by the GPS specifications that are presently available in the Internet under https://www.gps.gov/technical/.

Alternatively or additionally, GNSS navigation data may be provided by a server (e.g. a server of or supporting the GNSS based position solution), for example the GNSS navigation data may be provided by the server as part of or as GNSS assistance data. Accordingly, receiving GNSS navigation data (e.g. at least one of the first or second GNSS navigation data) may as well be understood to mean that the GNSS navigation data are received from such a server (e.g. as part of GNSS assistance data). In particular, the GNSS navigation data may be provided by the server as part of or as GNSS assistance data according to an assisted GNSS based positioning solution like assisted GPS or assisted Galileo. An example of such an assisted GNSS based positioning solution is assisted Global Navigation Satellite System (A-GNSS) as specified by the 3GPP for different cellular communication networks like a 2G/3G/4G/5G cellular communication network. Accordingly, the GNSS navigation data may be received as part of GNSS assistance data from a server of a cellular communication network via a wireless communication path. An example of such a wireless communication path is a wireless communication connection or link in a cellular network. A cellular communication network may for example be a 2G/3G/4G/5G cellular communication network. The 2G/3G/4G/5G cellular radio communication standards are developed by the 3GPP and presently available under http://www.3gpp.org/. It is however to be understood that the invention is not limited to this.

The first GNSS navigation data may be received before the second GNSS navigation data are received; and the second GNSS navigation data may be received after the first GNSS navigation data were received. It is to be understood that the received first and second GNSS navigation data are hold available, for example by storing the received first and second GNSS navigation data in a memory of the mobile device.

As disclosed below in more detail, ephemeris data contained by GNSS navigation data (e.g. the first GNSS navigation data, the extended first GNSS navigation data or the second GNSS navigation data) of a certain GNSS satellite and for a certain time period (e.g. the first time period, the extension time period or the second time period) may enable determining an orbital position of this certain GNSS satellite within this certain time period (e.g. at any given time of this certain time period); and clock data contained by GNSS navigation data (e.g. the first GNSS navigation data, the extended first GNSS navigation data or the second GNSS navigation data) of a certain GNSS satellite and for a certain time period (e.g. the first time period, the extension time period or the second time period) may enable determining a deviation of a clock of this certain GNSS satellite from a GNSS system time within this certain time period (e.g. at any given time of this certain time period). It is to be understood that a real orbital position of this certain GNSS satellite or a real deviation of a clock of this certain GNSS satellite may deviate from an orbital position of this certain GNSS satellite or an deviation of a clock of this certain GNSS satellite determined based on these epehemeris data or clock data. Nevertheless, the accuracy of the determined orbital position of this certain GNSS satellite or the determined deviation of a clock of this certain GNSS satellite may be considered to be sufficient for the GNSS based positioning solution within this certain time period.

The first GNSS navigation data, the extended first navigation data and the second navigation data may be at least partially different GNSS navigation data of the same at least one GNSS satellite. Accordingly, the ephemeris data contained by the first GNSS navigation data, the ephemeris data contained by the extended first GNSS navigation data and the ephemeris data contained by the second GNSS navigation data may enable determining an orbital position of the same at least one GNSS satellite; and the clock data contained by the first GNSS navigation data, the clock data contained by the extended first GNSS navigation data and the clock data contained by the second GNSS navigation data may enable determining a deviation of a clock of the same at least one GNSS satellite from a GNSS system time.

The first time period, the extension time period and the second time period may be at least partially different time periods. Accordingly, the ephemeris data contained by the first GNSS navigation data, the ephemeris data contained by the extended first GNSS navigation data and the ephemeris data contained by the second GNSS navigation data may enable determining an orbital position of the (e.g. same) at least one GNSS satellite within at least partially different time periods (e.g. at any given time within at least partially different time periods); and the clock data contained by the first GNSS navigation data, the clock data contained by the extended first GNSS navigation data and the clock data contained by the second GNSS navigation data may enable determining a deviation of a clock of the (e.g. same) at least one GNSS satellite from a GNSS system time within at least partially different time periods (e.g. at any given time within at least partially different time periods). To give a non-limiting example, the first time period and the second time period may be different time periods (e.g. the first time period and the second time period may not overlap) and the extension time period and the second time period may be at least partially equal (e.g. the extension time period and the second time period may at least partially overlap). In particular, the first time period may end before the second time period starts such that the first time period and the second time period do not overlap, and the extension time period may end after the second time period starts such that the extension time period and the second time period at least partially overlap.

Moreover, the first time period may define a temporal validity of the first GNSS navigation data, the extension time period may define a temporal validity of the extended first GNSS navigation data, and the second time period may define a temporal validity of the second GNSS navigation data. This may be understood to mean that the ephemeris data and the clock data contained by the first GNSS navigation data are only valid for the first time period, the ephemeris data and the clock data contained by the extended first GNSS navigation data are only valid for the extension time period and the ephemeris data and the clock data contained by the second GNSS navigation data are only valid for the second time period.

Determining the extended first GNSS navigation data may for example be understood to mean that the extended fist GNSS navigation data are estimated or computed according to a predetermined GNSS navigation data extension algorithm. For example, the extended first GNSS navigation data may be determined by computing or estimating at least one of ephemeris data or clock data for the extension time period according to a predetermined GNSS navigation data extension algorithm. For example, such a GNSS navigation data extension algorithm may receive the first GNSS navigation data as input and may output the extended first GNSS navigation data (e.g. containing at least one of (1) the ephemeris data or (2) the clock data) for the extension time period. It is to be understood that such a GNSS navigation data extension algorithm may optionally receive further data like extension time period data representing or indicating the extension time period as input Examples of a GNSS navigation data extension algorithm are for example provided by Rxnetworks as Self-Assisted GPS (SAGPS) and by SiRF (CSR) as InstantFix II. These known solutions provide GNSS navigation data extensions with a fixed validity period of 3 days.

The determining whether or not the second GNSS navigation data are potentially manipulated may be performed according to predetermined rules (e.g. a predetermined algorithm), For example, the predetermined rules may define when the second GNSS navigation data are to be determined to be potentially manipulated or to be not potentially manipulated. To give a non-limiting example, such predetermined rules may be based on the assumptation that, if the second GNSS navigation data are not manipulated, the second GNSS navigation data are not significantly different from the extended first GNSS navigation data. Accordingly, the predetermined rules may define that, if the second GNSS navigation data are significantly different from the extended first GNSS navigation data, the GNSS navigation data are to be determined to be potentially manipulated. Otherwise, the predetermined rules may define that the GNSS navigation data are to be determined to be not potentially manipulated (i.e. trustworthy).

According to a further exemplary aspect of the invention, an apparatus is disclosed, wherein the apparatus comprises means for performing any one embodiment of the disclosed method (e.g. the steps of any one embodiment of the disclosed method) or a part thereof (e.g. at least some steps of any one embodiment of the disclosed method).

The means of the disclosed apparatus can be implemented in hardware and/or software. They may comprise for instance a processor for executing computer program code for realizing the required functions, a memory storing the program code, or both. Alternatively, they could comprise for instance circuitry that is designed to realize the required functions, for instance implemented in a chipset or a chip, like an integrated circuit. The disclosed apparatus may comprise a single means for all functions, a common plurality of means for all functions, or a plurality of different means for different functions.

According to a further exemplary aspect of the invention, an apparatus is disclosed, wherein the apparatus comprises at least one processor and at least one memory containing computer program code, the at least one memory and the computer program code with the at least one processor configured to cause the apparatus at least to perform any one embodiment of the disclosed method (e.g. the steps of any one embodiment of the disclosed method) or a part thereof (e.g. at least some steps of any one embodiment of the disclosed method).

For example, the disclosed apparatus(es) may be (a) module(s) or component(s) for (a) mobile device (s), for example (a) chip(s) or chipset(s) (e.g. a GNSS chip or a GNSS chipset). Alternatively, the disclosed apparatus(es) may be (a) mobile device(s). As disclosed above, the mobile device may be enabled for or support a GNSS based positioning solution like the Galileo system or the GPS system. This may be understood to mean that the mobile device is configured to estimate its position (e.g. determine a position estimate of its position) at least partially based on one or more GNSS signals (e.g. GNSS signals reveived from at least four GNSS satellites) observed at this position and GNSS navigation data (e.g. the first or second GNSS navigation data).

It is to be understood that the disclosed apparatus(es) may comprise only the disclosed components (e.g. means) or may further comprise one or more additional components (e.g. means). Examples of such additional components are a GNSS sensor, a communciation interface (e.g. wireless communication interface like a receiver, a transmitter and/or a transceiver), a user interface (e.g. a touch-sensitive display, a keyboard, a touchpad, a display, etc.), etc.

According to a further exemplary aspect of the invention, a system is disclosed which comprises at least one of (1) the disclosed apparatus(es) (e.g. a mobile device) or (2) a server. Optionally, the system may further comprise one or more GNSS satellites.

As disclosed above, the server may be configured to provide (e.g. transmit) the first GNSS navigation data (e.g. as part of or as GNSS assistance data) to the mobile device.

The server may be part of a plurality of servers (e.g. forming a server cloud) or may be represented by such a plurality of servers (e.g. forming a server cloud). Alternatively or additionally, the server may be part of a cellular communication network.

According to a further exemplary aspect of the invention, a non-transitory computer readable storage medium is disclosed, in which computer program code is stored. The computer program code may for example be the below disclosed computer program code. The computer program code could be stored in the computer readable storage medium in the form of instructions encoding the computer-readable storage medium. The computer readable storage medium may be intended for taking part in the operation of an apparauts (e.g. a device), like an internal or external hard disk of a computer, or be intended for distribution of the program code, like an optical disc.

According to a further exemplary aspect of the invention, a computer program code is disclosed, the computer program code when executed by a processor (or by a plurality of processors) causing an apparatus to perform any one embodiment of the disclosed method (e.g. the steps of any one embodiment of the disclosed method). The computer program code may for example be or may be part of a computer program for the mobile device like an operating system for the mobile device, a GNSS driver programm for the mobile device or a GNSS application programm for the mobile device.

The disclosed method, apparatus(es), system, non-transitory computer readable storage medium and computer program code may be for identifying the second GNSS navigation data as potentially manipulated or as trustworthy (i.e. to be not potentially manipulated) at least partially based on the previously received first GNSS navigation data.

In the following, further features and embodiments of these exemplary aspects of the invention will be described.

According to an exemplary embodiment of the invention, the second GNSS navigation data are determined to be potentially manipulated or to be not potentially manipulated at least partially by at least one of:
- comparing the extended first GNSS navigation data and the second GNSS navigation data;
- determining one or more differences between the extended first GNSS navigation data and the second GNSS navigation data.

Comparing the extended first GNSS navigation data and the second GNSS navigation data may be understood to mean determining whether the extended first GNSS navigation data and the second navigation data are equal or different. Accordingly, a result of the comparing may indicate whether the extended first GNSS navigation data and the second GNSS navigation data are equal or different.

Determining one or more differences between the extended first GNSS navigation data and the second GNSS navigation data may be understood to mean that the data items (e.g. parameters represented by the emphemeris data and the clock data) of the extended first GNSS navigation data and the data items (e.g. parameters represented by the emphemeris data and the clock data) of the second navigation data are determined (e.g. identified) that are different Accordingly, a result of the comparing may indicate the differences between the extended first GNSS navigation data and the second GNSS navigation data, for examply by indicating at least one of (1) the data items of the extended first GNSS navigation data and (2) the data items of the second navigation data that are different.

For example, the determining one or more differences between the extended first GNSS navigation data and the second navigation data may only be performed, if a result of the comparing the extended first GNSS navigation data and the second navigation data is that the extended first GNSS navigation data and the second navigation data are different.

Comparing the extended first GNSS navigation data and the second navigation data may be performed according to a predetermined comparing algorithm. Likewise, determining one or more differences between the extended first GNSS navigation data and the second navigation data may be performed according to a predetermined algorithm.

Based on at least one of (1) a result of the comparing or (2) a result of the determining one or more differences between the extended first GNSS navigation data and the second GNSS navigation data, it may be then determined whether or not the second GNSS navigation data are potentially manipulated. As disclosed above, the determining whether or not the second GNSS navigation data are potentially manipulated may be performed according to predetermined rules (e.g. a predetermined algorithm) which may be based on the assumptation that, if the second GNSS navigation data are not manipulated, the second GNSS navigation data are not significantly different from the extended first GNSS navigation data. Accordingly, the predetermined rules may define that, if (1) a result of the comparing indicates that the second GNSS navigation data are equal to the extended first GNSS navigation data or (2) a result of the determining one or more differences between the extended first GNSS navigation data and the second GNSS navigation data indicates only differences between the second GNSS navigation data and the extended first GNSS navigation data that are defined by the predetermined rules to be (e.g. alone and together) no significant difference(s), the GNSS navigation data are to be determined to be not potentially manipulated. Otherwise, the predetermined rules may define that the GNSS navigation data are to be determined to be potentially manipulated.

According to an exemplary embodiment of the invention, each of the ephemeris data of the first GNSS navigation data, the ephemeris data of the extended first GNSS navigation data and the ephemeris data of the second GNSS navigation data represent one or more respective parameter values of one or more orbit paramaters enabling determining an orbital position of the at least one GNSS satellite at a (e.g. any) given time in the respective time period of the first time period, the extension time period and the second time period. This may be understood to mean that:
- the first GNSS navigation data contain ephemeris data representing one or more respective parameter values of one or more orbit parameters enabling determining an orbital position of the at least one GNSS satellite at a (e.g. any) given time in the first time period;
- the extended first GNSS navigation data contain ephemeris data representing one or more respective parameter values of one or more orbit parameters enabling determining an orbital position of the at least one GNSS satellite at a (e.g. any) given time in the extension time period;
- the second GNSS navigation data contain ephemeris data representing one or more respective parameter values of one or more orbit parameters enabling determining an orbital position of the at least one GNSS satellite at a (e.g. any) given time in the second time period.

It is to be understood that the respective parameter values represented by the respective ephemeris data only enable determining an orbital position of the at least one GNSS satellite at a (e.g. any) given time in the respective time period of the first time period, the extension time period and the second time period. Accordingly, the respective time period of the first time period, the extension time period and the second time period may be understood to define the temporal validity of the respective ephemeris data. The respective ephemeris data may not be used for determining an orbital position of the at least one GNSS satellite at a given time before or after the respective time period.

The orbit parameters may for example be keplerian parameters. In particular, the orbit parameters may be ephemeris parameters as specified by the Galileo open service specifications or GPS specifications. Accordingly, the ephemeris data of the first GNSS navigation data, the ephemeris data of the extended first GNSS navigation data and the ephemeris data of the second GNSS navigation data may for example represent one or more respective parameter values of one or more keplerian parameters and/or ephemeris parameters of the at least one GNSS satellite.

For example, each of the ephemeris data of the first GNSS navigation data, the ephemeris data of the extended first GNSS navigation data and the ephemeris data of the second GNSS navigation data may represent one or more respective parameter values of one or more of the following orbit parameters: mean anomaly at reference time, mean motion difference from computed value, eccentricity, square root of the semi-major axis, longitude of ascending node of orbital plane at weekly epoch, inclination angle at reference time, argument of perigee, rate of change of right ascension, rate of change of inclination angle, amplitude of the cosine harmonic correction term to the argument of latitude, amplitude of the sine harmonic correction term to the argument of latitude, amplitude of the cosine harmonic correction term to the orbit radius, amplitude of the sine harmonic correction term to the orbit radius, amplitude of the cosine harmonic correction term to the angle of inclination, amplitude of the sine harmonic correction term to the angle of inclination, ephemeris reference time.

For example, the second GNSS navigation data are determined to be potentially manipulated if one or more differences between a respective parameter value of a respective orbit parameter of the one or more orbit paramaters represented by the ephemeris data of the extended first GNSS navigation data and a respective parameter value of the respective orbit parameter of the one or more orbit paramaters represented by the ephemeris data of the second GNSS navigation data is equal to or exceeds a predetermined threshold. Otherwise, the second GNSS navigation data may be determined to be not potentially manipulated.

A difference between a respective parameter value of a respective orbit parameter of the one or more orbit paramaters represented by the ephemeris data of the extended first GNSS navigation data and a respective parameter value of the respective orbit parameter of the one or more orbit paramaters represented by the ephemeris data of the second GNSS navigation data may be understood to be the result of the subtraction of the respective parameter value of the respective orbit parameter of the one or more orbit paramaters represented by the ephemeris data of the extended first GNSS navigation data and the respective parameter value of the respective orbit parameter of the one or more orbit paramaters represented by the ephemeris data of the second GNSS navigation data.

Moreover, a threshold may be understood to be a threshold value. It is to be understood that, for each of the one or more orbit parameters, a respective threshold may be predetermined. The threshold(s) may for example be predetermined such that it is expected that the second GNSS navigation data are potentially manipulated (e.g. such that it is expected to be likely that the second GNSS navigation data are potentially manipulated) if one or more difference(s) are equal to or exceed the threshold(s).

As disclosed above, the determining may be performed according to predetermined rules. For example, these predetermined rules may define, for one or more orbit parameters for which the ephemeris data contained by the extended first GNSS navigation data and the ephemeris data contained by the second GNSS navigation data represent a respective parameter value, a respective predetermined threshold. Accordingly, if one or more differences between a respective parameter value of a respective orbit parameter of the one or more orbit paramaters represented by the ephemeris data of the extended first GNSS navigation data and a respective parameter value of the respective orbit parameter of the one or more orbit paramaters represented by the ephemeris data of the second GNSS navigation data is equal to or exceeds a predetermined threshold defined by the predetermined rules for this respective orbit parameter, the second GNSS navigation data may be determined to be potentially manipulated. Otherwise, the second GNSS navigation data may be determined to be not potentially manipulated. The threshold(s) may for example be predetermined such that it is expected that the second GNSS navigation data are potentially manipulated (e.g. such that it is expected to be likely that the second GNSS navigation data are potentially manipulated) if one or more difference(s) are equal to or exceed the threshold(s).

According to an exemplary embodiment of the invention, each of the clock data of the first GNSS navigation data, the clock data of the extended first GNSS navigation data and the clock data of the second GNSS navigation data represent one or more respective parameter values of one or more clock paramaters enabling determining a deviation of a clock of the at least one GNSS satellite from a GNSS system time at a (e.g. any) given time in the respective time period of the first time period, the extension time period and the second time period. This may be understood to mean that:
- the clock data of the first GNSS navigation data represent one or more respective parameter values of one or more clock paramaters enabling determining a deviation of a clock of the at least one GNSS satellite from a GNSS system time at a (e.g. any) given time in the first time period;
- the clock data of the extended first GNSS navigation data represent one or more respective parameter values of one or more clock paramaters enabling determining a deviation of a clock of the at least one GNSS satellite from a GNSS system time at a (e.g. any) given time in the extension time period;
- the clock data of the second GNSS navigation data represent one or more respective parameter values of one or more clock paramaters enabling determining a deviation of a clock of the at least one GNSS satellite from a GNSS system time at a (e.g. any) given time in the second time period.

It is to be understood that the respective parameter values represented by the respective clock data only enable determining a deviation of a clock of the at least one GNSS satellite from a GNSS system time at a (e.g. any) given time in the respective time period of the first time period, the extension time period and the second time period. Accordingly, the respective time period of the first time period, the extension time period and the second time period may be understood to define the temporal validity of the respective clock data. The respective clock data may not be used for determining a deviation of a clock of the at least one GNSS satellite from a GNSS system time at a given time before or after the respective time period.

The GNSS system time may be the GNSS system time of the GNSS system comprising the at least one GNSS satellite like the GPS time or Galileo time.

The clock parameters may for example be clock correction parameters. In particular, the clock parameters may for example be clock correction parameters as specified by Galileo open service specifications or GPS specifications. Accordingly, the clock data of the first GNSS navigation data, the clock of the extended first GNSS navigation data and the clock data of the second GNSS navigation data may represent one or more respective parameter values of one or more clock correction parameters of the at least one GNSS satellite.

For example, each of the clock data of the first GNSS navigation data, the clock data of the extended first GNSS navigation data and the clock data of the second GNSS navigation data may represent one or more respective parameter values of one or more of the following clock parameters: clock correction data reference time of week, clock bias correction coefficient, clock drift correction coefficient, clock drift rate correction coefficient.

For example, the GNSS navigation data are determined to be potentially manipulated if one or more differences between a respective parameter value of a respective clock parameter of the one or more clock paramaters represented by the clock data of the extended first GNSS navigation data and a respective parameter value of the respective clock parameter of the one or more clock paramaters represented by the clock data of the second GNSS navigation data is equal to or exceeds a predetermined threshold. Otherwise, the second GNSS navigation data may be determined to be not potentially manipulated.

A difference between a respective parameter value of a respective clock parameter of the one or more clock paramaters represented by the clock data of the extended first GNSS navigation data and a respective parameter value of the respective clock parameter of the one or more clock paramaters represented by the clock data of the second GNSS navigation data may be understood to be the result of the subtraction of the respective parameter value of the respective clock parameter of the one or more clock paramaters represented by the clock data of the extended first GNSS navigation data and the respective parameter value of the respective clock parameter of the one or more clock paramaters represented by the clock data of the second GNSS navigation data.

Moreover, a threshold may be understood to be a threshold value. It is to be understood that, for each of the one or more clock parameters, a respective threshold may be predetermined. The threshold(s) may for example be predetermined such that it is expected that the second GNSS navigation data are potentially manipulated (e.g. such that it is expected to be likely that the second GNSS navigation data are potentially manipulated) if one or more difference(s) are equal to or exceed the threshold(s).

As disclosed above, the determining may be performed according to predetermined rules. For example, these predetermined rules may define, for one or more clock parameters for which the clock data contained by the extended first GNSS navigation data and the clock data contained by the second GNSS navigation data represent a respective parameter value, a respective predetermined threshold. Accordingly, if one or more differences between a respective parameter value of a respective clock parameter of the one or more clock paramaters represented by the clock data of the extended first GNSS navigation data and a respective parameter value of the respective clock parameter of the one or more clock paramaters represented by the clock data of the second GNSS navigation data is equal to or exceeds a predetermined threshold defined by the predetermined rules for this respective clock parameter, the second GNSS navigation data may be determined to be potentially manipulated. Otherwise, the second GNSS navigation data may be determined to be not potentially manipulated. The threshold(s) may for example be predetermined such that it is expected that the second GNSS navigation data are potentially manipulated (e.g. such that it is expected to be likely that the second GNSS navigation data are potentially manipulated) if one or more difference(s) are equal to or exceed the threshold(s).

According to an exemplary embodiment of the invention, each of the first GNSS navigation data, the extended first GNSS navigation data and the second GNSS navigation data are indicative of the respective time period of the first time period, the extension time period and the second time period. This may be understood to mean that:
the first GNSS navigation data are indicative of the first time period,
- the extended first GNSS navigation data are indicative of the extension time period,
- the second GNSS navigation data are indicative of the second time period,

Therein, the first GNSS navigation data, the extended first GNSS navigation data and the second GNSS navigation data may be understood to be indicative of the respective time period of the first time period, the extension time period and the second time period by representing or containing a respective reference time for the respective GNSS navigation data or parts thereof. For example, the respective time period may then a have a predetermined duration (e.g. 3 hour, 4 hours or 8 hours) after the respective reference time.

Alternatively or additionally, the first GNSS navigation data, the extended first GNSS navigation data and the second GNSS navigation data may be understood to be indicative of the respective time period of the first time period, the extension time period and the second time period by representing or containing a respective validity time for the respective GNSS navigation data or parts thereof. For example, the respective time period may then a have a predetermined duration (e.g. 3 hour, 4 hours or 8 hours) before the respective validity time.

Moreover, the first GNSS navigation data, the extended first GNSS navigation data and the second GNSS navigation data may be understood to be indicative of the respective time period of the first time period, the extension time period and the second time period by representing or containing both a respective reference time and a respective validity time.

A respective reference time and/or a respective validity time may be represented by or contained in the respective GNSS navigation data in seconds in the respective GNSS week (e.g. GPS week or Galileo week).

According to an exemplary embodiment of the invention, the method further comprises one or more of the following steps, if it is determined that the second GNSS navigation data are potentially manipulated:
- identifying or causing of identifying the second GNSS navigation data as potentially manipulated;
- rejecting the second GNSS navigation data;
- if a position of the mobile device is estimated at least partially based on the second GNSS navigation data, identifying the position estimate as potentially manipulated;
- associating the second GNSS navigation data with a manipulation risk level.

Identifying the second GNSS navigation data as potentially manipulated may be understood to mean that manipulation data identifying the second GNSS navigation data as potentially manipulated are hold available by the mobile device, for example by being stored in a memory of the mobile device. Causing of identifying the second GNSS navigation data as potentially manipulated may be understood to mean that the mobile device provides manipulation data to a remote device like a server causing the remote device to identify the second GNSS navigation data as potentially manipulated. This may have the effect that other mobile devices receiving the second GNSS navigation data may be informed (e.g. by the remote device) that the second GNSS navigation data are potentially manipulated.

Rejecting the second GNSS navigation data may be understood to mean that the rejected second GNSS navigation data are not used for estimating (e.g. determining a position estimate of) a position of the mobile device. This has the effect that only GNSS navigation data which are considered to be trustworthy (i.e. not potentially manipulated) are used for estimating (e.g. determining a position estimate of) a position of the mobile device.

Identifying a position estimate as potentially manipulated may be understood to mean that manipulation data identifying the position estimate as potentially manipulated are hold available by the mobile device, for example by being stored in a memory of the mobile device. For example, the manipulation data may be stored together or may be part of position data containing a representation of the position estimate (e.g. in the form of positioning coordinates). By identifying the position estimate as potentially manipulated, the potential manipulation can be considered when further processing the position estimate. For example, business services or applications which rely on trustworthy positioning like car sharing services may not use position estimates identified as potentially manipulated. Other business services or applications may however consider position estimates identified as potentially manipulated.

Associating the second GNSS navigation data with a manipulation risk level may be understood to mean that manipulation risk level data representing a manipulation risk level are hold available by the mobile device, for example by being stored in a memory of the mobile device. A manipulation risk level may be understood to be indicative of a probability that the second GNSS navigation data are manipulated. For example, a manipulation risk level may represent a percentage indicative of the a probability that the second GNSS navigation data are manipulated. The probability that the second GNSS navigation data are manipulated may for example be determined based on the difference(s) (e.g. the value of the difference(s) and/or the number of difference(s)) between the extended first GNSS navigation data and the second GNSS navigation data.

According to an exemplary embodiment of the invention, the first GNSS navigation data are received from a server.

As disclosed above, GNSS navigation data may be provided (e.g. trasmitted) by a server as part of or as GNSS assistance data. Receiving the first GNSS navigation data from the server may accordingly be understood to mean that the first GNSS navigation data are received as part of or as GNSS assistance data provided by the server. In particular, the GNSS navigation data may be part of or may be GNSS assistance data according to an assisted GNSS based positioning solution like assisted GPS or assisted Galileo. An example of such an assisted GNSS based positioning solution is assisted Global Navigation Satellite System (A-GNSS) as specified by the 3GPP for different cellular communication networks like a 2G/3G/4G/5G cellular communication network. If the server is considered to be trustworthy or to be considered to be part of a trustworthy cellular communication network, this may have the effect that the first GNSS navigation data may be considered to be trustworthy (i.e. to be not potentially manipulated) as well.

According to an exemplary embodiment of the invention, the second GNSS navigation data are received from a GNSS satellite.

As disclosed above, each GNSS satellite of a GNSS based position soulition orbiting the Earth may (e.g. periodically or repeatedly or continuously) broadcast a respective GNSS signal conveying a message containing the GNSS navigation data of the respective satellite (i.e. the GNSS navigation data are part of the message). Receiving the second GNSS navigation data from a GNSS satellite may accordingly be understood to mean that the second GNSS navigation data are received from the GNSS satellite by receiving a GNSS signal conveying a message containing the GNSS navigation data from the GNSS satellite. An example of such a message is a Galileo F/NAV message as specified by the Galileo open service specifications. Another example for such a message is a GPS navigation message as specified by the GPS specifications.

According to an exemplary embodiment of the invention, each GNSS satellite of a GNSS system periodically broadcasts respective GNSS navigation data. For example, the GNSS system may be part of or may be a GNSS based positioning solution. The mobile device may be enabled for or support this GNSS based positioning solution like the Galileo system or the GPS system.

According to an exemplary embodiment of the invention, at least one of the first GNSS navigation data and the second GNSS navigation data are received via a wireless communication path. As disclosed above, an example of such a wireless communication path is a wireless communication connection or link in a cellular network. A cellular communication network may for example be a cellular communication network like a 2G/3G/4G/5G cellular communication network.

According to an exemplary embodiment of the invention, the method further comprises:
- observing one or more GNSS signals at a position of the mobile device;
- estimating the position of the mobile device at least partially based on the GNSS signals and the second GNSS navigation data.

Observing one or more GNSS signals at the position of the mobile device may for example be understood to mean that the one or more GNSS signals are received by the mobile device when scanning for observable GNSS signals at this position.

Estimating the position of the mobile device at least partially based on the GNSS signals and the second GNSS navigation data may be understood to mean that the estimation depends on the GNSS signals and the second GNSS navigation data. It is however to be understood that the estimating may optionally depend on further data or information.

Moreover, estimating the position of the mobile device may be understood to mean that a position estimate of the position of the mobile device is determined at least partially based on the GNSS signals and the second GNSS navigation data. Therein, the estimating or determining may be performed according to a predetermined GNSS positioning algorithm. To give a non-limiting example, such a GNSS positioning algorithm may comprise at least one of the following steps:
- determining, for each of the one or more GNSS signals, a respective pseudorange between the mobile device and the respective GNSS satellite broadcasting the respective GNSS signal of the one or more GNSS signals at least partially based on the respective GNSS signal of the one or more GNSS signals;
- determining, for at least one of the GNSS satellite(s) broadcasting the one or more GNSS signals, a respective orbital position (e.g. at the time-of-transmission) at least partially based on the second GNSS navigation data (e.g. at least partially based on the ephemeris data contained by the second GNSS navigation data);
- determining the position estimate of the position of the mobile device at least partially based on the determined pseudorange(s) and the determined orbital position(s), for examply by solving a GNSS observation equation system at least partially based on the determined pseudorange(s) and the determined orbital position(s) (e.g. a minimum of four GNSS signals observed by the mobile device may be necessary to solve such a GNSS observation equation system).

The position estimate of the position of the mobile device may be understood to be a representation of the position estimate obtained as a result of the determining as disclosed above. It is however to be understood that the position estimate of the position of the mobile device may deviate from the real position of the mobile device (e.g. due to uncertainties like measurement errors or due to manipulation of the GNSS navigation data).

As disclosed above, it may be necessary that the mobile device observes at least four GNSS satellites to enable the mobile device to estimate its position based on the observed GNSS signals and (e.g. temporal valid) GNSS navigation data of these at least four GNSS satellits

It is to be understood that the presentation of the invention in this section is merely by way of examples and non-limiting.

Other features of the invention will become apparent from the following detailed description considered in conjunction with the accompanying figures. It is to be understood, however, that the figures are designed solely for purposes of illustration and not as a definition of the limits of the invention, for which reference should be made to the appended claims. It should be further understood that the figures are not drawn to scale and that they are merely intended to conceptually illustrate the structures and procedures described herein.

### BRIEF DESCRIPTION OF THE FIGURES

- Fig. 1: is a block diagram of an exemplary embodiment of a system according to the invention;
- Fig. 2: is a block diagram of an exemplary embodiment of a mobile device according to the invention;
- Fig. 3: is a flow chart illustrating an exemplary embodiment of a method according to the invention;
- Fig. 4: is a table representing exemplary orbit parameters and exemplary parameter values of these exemplary orbit parameters;
- Fig. 5: is a schematic illustration of examples of tangible and non-transitory storage media according to the invention.

### DETAILED DESCRIPTION OF THE FIGURES

The following description serves to deepen the understanding of the present invention and shall be understood to complement and be read together with the description of example embodiments of the invention as provided in the above SUMMARY section of this specification.

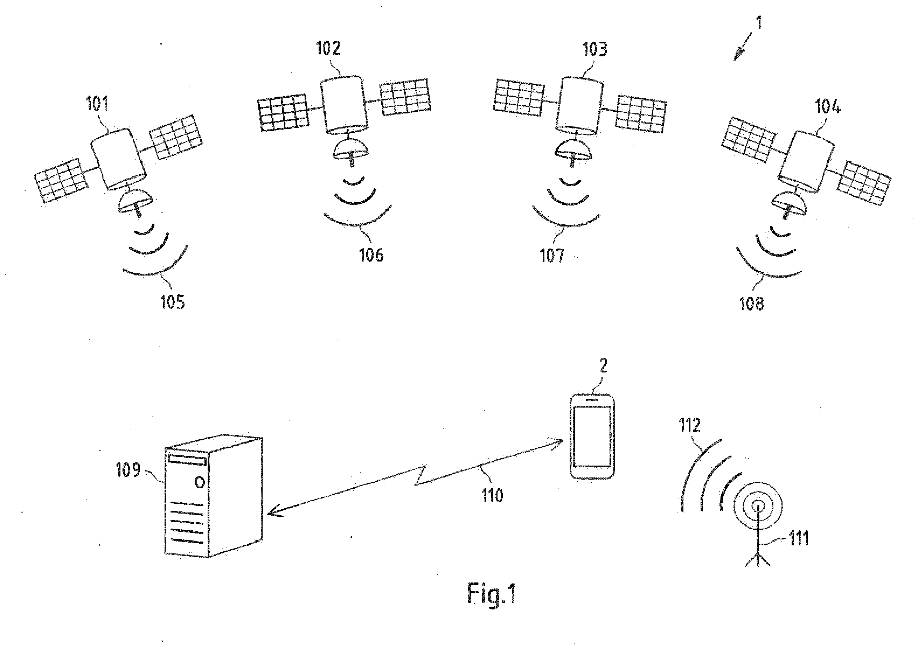

Fig. 1 is a schematic high-level block diagram of a system 1 according to an exemplary aspect of the invention. Without limiting the scope of the invention, it is assumed in the following that system 1 is part of or is a GNSS based positioning solution.

For illustrative purposes, Fig. 1 shows four GNSS satellites 101 to 104 of a GNSS system like the Galileo system or the GPS system. Each GNSS satellite of GNSS satellites 101 to 104 (e.g. periodically or repeatedly or contiously) broadcasts a respective GNSS signal of GNSS signals 105 to 108 conveying a respective message containing respective GNSS navigation data. In the following, it is assumed that the respective GNSS navigation data contain ephemeris data that enable determining an orbital position of the respective GNSS satellite at any given time within a limited time period and clock data that enable determining a deviation of a clock of the respective GNSS satellite from a GNSS system time at any given time within a limited time period. As disclosed above, an example of such a message is a Galileo F/NAV message as specified by the Galileo open service specifications or a GPS navigation message as specified by the GPS specifications. Accordingly, ephemeris data may represent or contain ephemeris parameters as specified by the Galileo open service specifications or the GPS specifications; and the clock data may represent or contain clock correction parameters as specified by the Galileo open service specifications or the GPS specifications.

System 1 comprises a mobile device 2 and a server 109 which may communication with each other via communication path 110. Communication path 110 may be a direct or indirect communication path. For example, communication path 110 may comprise one or more hops, for example one or more communication links or communication connections. In the following, it is assumed that communication path 110 is a wireless communication connection in a cellular communication network like a 2G/3G/4G/5G cellular communication network. It is however to be understood that the invention is not limited to this.

System 1 is not limited to a single server 109, but may optionally comprise a plurality of servers (e.g. forming a server cloud). Accordingly, server 109 may be part of such a plurality of servers (e.g. a server cloud) or may be represented by such a plurality of servers (e.g. a server cloud).

Server 109 may be part of a cellular communication network and may provide mobile devices of this cellular communication nework with GNSS navigation data of at least one of GNSS satellites 101 to 104 as part of or as GNSS assistance data. In particular, these GNSS navigation data may be provided by the server as part of or as GNSS assistance data according to an assisted GNSS based positioning solution like assisted GPS or assisted Galileo. An example of such an assisted GNSS based positioning solution is assisted Global Navigation Satellite System (A-GNSS) as specified by the 3GPP. For example, server 109 may provide GNSS navigation data of at least one of GNSS satellites 101 to 104 as part of or as GNSS assistance data by transmitting the GNSS assistance data via wireless communication path 110 to mobile device 2.

For example, mobile device 2 may be one of a smart home device, a smartphone, a tablet computer, a notebook computer, a smart watch, and a smart band. Mobile device 2 may support the GNSS based positioning solution of system 1. This may be understood to mean that mobile device 2 is configured to estimate its position (e.g. determine a position estimate of its position) at least partially based on GNSS signals 105 to 108 observed at this position and valid GNSS navigation data of GNSS satellites 101 to 104.

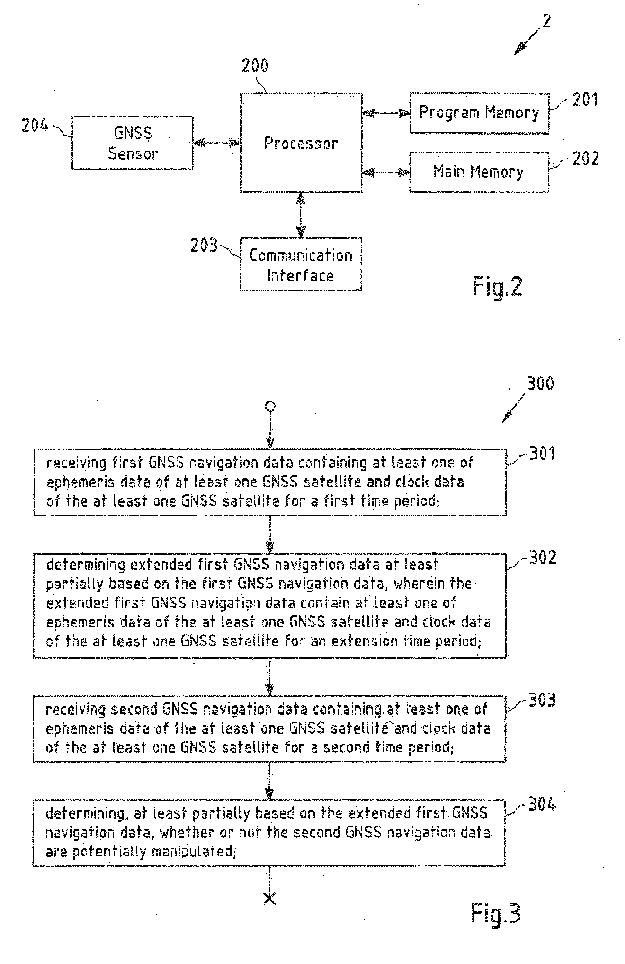

Since the GNSS navigation data are crucial for the GNSS based positioning solution and only valid for a limited time period, the GNSS navigation data need to be updated at regular intervals. This may be exploited by an attacker by installing a spoofing device 111 in a certain area which brodcasts a spoofed GNSS signal 112. For example, spoofed GNSS signal 112 may be falsified such that it resembles GNSS signal 105 broadcast by GNSS satellite 101, but spoofed GNSS signal 112 may convey a message containing manipulated GNSS navigation data, for example to cause mobile device 2 to estimate its position to be somewhere other than it actually is. As disclosed in more detail below with respect to Fig. 3, this threat may be mitigated by the disclosed method.

Fig. 2 is a block diagram of an exemplary embodiment of mobile device 2 according to the invention. In the following, it is assumed that mobile device 2 of Fig. 1 corresponds to this mobile device 2.

Mobile device 2 comprises a processor 200. Processor 200 may represent a single processor or two or more processors, which are for instance at least partially coupled, for instance via a bus. Processor 200 executes a computer program code stored in program memory 201 (e.g. computer program code causing mobile device 2 to perform any one embodiment of the disclosed method (e.g. the steps of any one embodiment of the disclosed method) or a part thereof (e.g. at least some steps of any one embodiment of the disclosed method) (as for instance further described below with reference to Fig. 3), when executed on processor 200), and interfaces with a main memory 202. Program memory 201 may also contain an operating system for processor 200 and further data like GNSS navigation data (e.g. at least one of first GNSS navigation data, extended first GNSS navigation data or second GNSS navigation data). Some or all of memories 201 and 202 may also be included into processor 200. One of or both of memories 201 and 202 may be fixedly connected to processor 200 or at least partially removable from processor 200, for example in the form of a memory card or stick.

A program memory (e.g. program memory 201) may for example be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 202) may for example be a volatile memory. It may for example be a DRAM memory, to give non-limiting example. It may for instance be used as a working memory for a processor (e.g. processor 200) when executing an operating system and/or programs.

Processor 200 further controls a wireless communication interface 203 configured for communicating via a cellular network (e.g. to transmit and receive cellular radio signals). For example, wireless communication interface 203 may be or may comprise a 2G/3G/4G/5G radio transceiver. Mobile device 2 may use wireless communication interface 203 to receive GNSS navigation data as part of or as GNSS assistance data from server 109 of system 1 (e.g. via wireless communication path 110).

Moreover, processor 200 controls a GNSS sensor 204 configured for receiving GNSS signals (e.g. GNSS signals 105 to 108 broadcasted by GNSS satellites 101 to 104 of Fig. 1). GNSS sensor 204 is configured for (e.g. periodically or repeatedly) scanning for observable GNSS signals (e.g. GNSS signals 105 to 108 broadcasted by GNSS satellites 101 to 104 of Fig. 1). Therein, a respective GNSS signal may be understood to be observable if the respective GNSS signal is receivable with a minimum quality (e.g. a minimum quality enabling a carrier locking and code locking of the respective observed GNSS signal) by GNSS sensor 204.

GNSS sensor 204 enables mobile device 2 to receive GNSS navigation data contained in a message conveyed in an observed GNSS signal. To this end, GNSS sensor 204 may be configured for extracting the GNSS navigation data from the received or observed GNSS signal.

Moreover, GNSS sensor 204 enables mobile device 2 to estimate its position based on GNSS signals observed when scanning for observable GNSS signals at this position. For example, GNSS sensor 204 may be configured for providing processor 200 with data necessary for determining a position estimate of the position of mobile device 2. To this end, GNSS sensor 204 may be configured for determining, for each of the observed GNSS signals, respective GNSS observation data relating to the observation of the respective GNSS signal by GNSS sensor 204 which enable determining a pseudorange between the mobile device and the respective GNSS satellite broadcasting the respective observed GNSS signal.

It is to be understood that any computer program code required for receiving and processing received GNSS signals may be stored in an own memory of GNSS sensor 204 and executed by an own processor of GNSS sensor 204 or it may be stored for example in program memory 201 and executed for example by processor 200.

The components 201 to 204 of mobile device 2 may for instance be connected with processor 200 by means of one or more serial and/or parallel busses.

It is to be understood that mobile device 2 may comprise various other components like a user interface for receiving user input.

Fig. 3 is a flow chart 3 illustrating an exemplary embodiment of a method according to the invention. Without limiting the scope of the invention, it is assumed in the following that mobile device 2 as disclosed above with respect to system 1 of Fig. 1 performs the steps of flow chart 3. Moreover, it is assumed in the following that the respective GNSS navigation data are respective GNSS navigation data of GNSS satellite 101 of GNSS satellites 101 to 104. It is however to be understood that the invention is not limited to this.

In a step 301, first GNSS navigation data are received by mobile device 2.

The first GNSS navigation data contain at least one of ephemeris data of GNSS satellite 101 and clock data of GNSS satellite 101 for a first time period. In particular, the first GNSS navigation data may contain both: (1) ephemeris data of GNSS satellite 101 representing one or more respective parameter values of one or more orbit paramaters enabling determining an orbital position of GNSS satellite 101 at any given time in the first time period and (2) clock data of GNSS satellite 101 representing one or more respective parameter values of one or more clock paramaters enabling determining a deviation of a clock of GNSS satellite 101 from a GNSS system time of the GNSS based positioning solution of system 1 at any given time in the first time period. For example, the orbit parameters may be ephemeris parameters as specified by the Galileo open service specifications or GPS specifications and the clock parameters may be clock correction parameters as specified by the Galileo open service specifications or GPS specifications.

As disclosed above, server 109 may provide GNSS navigation data as part of or as GNSS assistance data. Accordingly, the first GNSS navigation data may be or may be part of GNSS assistance data which are received by mobile device 2 via communication path 109 from server 109 in step 301. The first GNSS navigation data are received from server 109 which may be considered to be trustworthy and, thus, the first GNSS navigation data may be considered to be trustworthy (i.e. to be not potentially manipulated) as well.

The first GNSS navigation data received in step 301 may be stored in program memory 201.

In a step 302, extended first GNSS navigation data are determined by mobile device 2 at least partially based on the first GNSS navigation data received in step 301.

The extended first GNSS navigation data contain at least one of ephemeris data of GNSS satellite 101 and clock data of GNSS satellite 101 for an extension time period. In particular, the extended first GNSS navigation data may contain both: (1) ephemeris data of GNSS satellite 101 representing one or more respective parameter values of one or more orbit paramaters enabling determining an orbital position of GNSS satellite 101 at any given time in the extension time period and (2) clock data of GNSS satellite 101 representing one or more respective parameter values of one or more clock paramaters enabling determining a deviation of a clock of GNSS satellite 101 from a GNSS system time of the GNSS based positioning solution of system 1 at any given time in the extension time period. As disclosed above, the orbit parameters may be ephemeris parameters as specified by the Galileo open service specifications or GPS specifications and the clock parameters may be clock correction parameters as specified by the Galileo open service specifications or GPS specifications.

For example, the first time period may end before the extension time period starts such that the first time period and the extension time period are different (i.e. do not overlap).

The extended first GNSS navigation data may be determined (e.g. estimated or computed) by mobile device 2 in step 302 according to a predetermined GNSS navigation data extension algorithm. For example, such a GNSS navigation data extension algorithm may receive the first GNSS navigation data for the first time period as input and may output the extended first GNSS navigation data) for the extension time period. It is to be understood that such a GNSS navigation data extension algorithm may optionally receive further data like extension time period data representing or indicating the extension time period as input.

As disclosed above, the first GNSS navigation data may be considered to be trustworthy (i.e. to be not potentially manipulated) if they are received from server 109. Accordingly, the extended first GNSS navigation data determined at least partially based on the first GNSS navigation data may be considered to be trustworthy (i.e. to be not potentially manipulated) as well. This is particularly advantageous when the mobile device can not receive GNSS navigation data for the extension time period from server 109, for example because mobile device 2 is out of coverage of the cellular communication network of server 109.

The extended first GNSS navigation data determined in step 302 may be stored in program memory 201.

In a step 303, second GNSS navigation data are received by mobile device 2.

The second GNSS navigation data contain at least one of ephemeris data of GNSS satellite 101 and clock data of GNSS satellite 101 for a second time period. In particular, the second GNSS navigation data may contain both: (1) ephemeris data of GNSS satellite 101 representing one or more respective parameter values of one or more orbit paramaters enabling determining an orbital position of GNSS satellite 101 at any given time in the second time period and (2) clock data of GNSS satellite 101 representing one or more respective parameter values of one or more clock paramaters enabling determining a deviation of a clock of GNSS satellite 101 from a GNSS system time of the GNSS based positioning solution of system 1 at any given time in the second time period. As disclosed above, the orbit parameters may be ephemeris parameters as specified by the Galileo open service specifications or GPS specifications and the clock parameters may be clock correction parameters as specified by the Galileo open service specifications or GPS specifications.

As disclosed above, the first time period may end before the second time period starts such that the first time period and the second time period are different (i.e. do not overlap). Moreover, the extension time period and the second time period may be equal (i.e. overlap). For example, the extension time period may be determined (e.g. selected) such that it is equal to the second time period.

As disclosed above, each GNSS satellite of GNSS satellites 101 to 104 broadcasts a respective GNSS signal of GNSS signals 105 to 108 conveying a respective message containing respective GNSS navigation data containing ephemeris and clock data. Spoofing device 111 brodcasts a spoofed GNSS signal 112 which is falsified such that it resembles GNSS signal 105 broadcast by GNSS satellite 101, but spoofed GNSS signal 112 may convey a message containing manipulated GNSS navigation data. Accordingly, mobile device may receive the second GNSS navigation data in step 303 from GNSS satellite 101 or from spoofing device 111 by receiving GNSS signal 105 or spoofed GNSS signal 112 convyeing a message containing the second GNSS navigation data (e.g. in form of authentic GNSS navigation data or manipulated GNSS navigation data) and by (2) extracting the second GNSS navigation data from the received GNSS signal. Accordingly, there is a threat that the second GNSS navigation data are manipulated.

The second GNSS navigation data received in step 303 may be stored in program memory 201.

In a step 304, it is determined by mobile device 2 whether or not the second GNSS navigation data received in step 303 are potentially manipulated. The determining in step 304 is performed at least partially based on the extended first GNSS navigation data determined in step 302.

The determining in step 304 may be performed according to predetermined rules defining when the second GNSS navigation data are to be determined to be potentially manipulated or to be not potentially manipulated. As disclosed above, such predetermined rules may be based on the assumptation that, if the second GNSS navigation data are not manipulated, the second GNSS navigation data are not significantly different from the extended first GNSS navigation data. As disclosed above, the extended first GNSS navigation data may be considered to be trustworthy (i.e. to be not potentially manipulated). Accordingly, the predetermined rules may define that, if the second GNSS navigation data are significantly different from the extended first GNSS navigation data, the GNSS navigation data are to be determined to be potentially manipulated. Otherwise, the predetermined rules may define that the GNSS navigation data are to be determined to be not potentially manipulated.

To this end, the predetermined rules may for example define for one or more orbit parameters and/or for one or more clock parameters a respective predetermined threshold (e.g. threshold value) such that the second GNSS navigation data may be determined to be potentially manipulated in step 304 if at least one of the following conditions is met:
(1) one or more differences between a respective parameter value of a respective orbit parameter of the one or more orbit paramaters represented by the ephemeris data of the extended first GNSS navigation data and a respective parameter value of the respective ephemeris parameter of the one or more orbit paramaters represented by the ephemeris data of the second GNSS navigation data is equal to or exceeds a respective predetermined threshold defined for this respective orbit parameter;
(2) one or more differences between a respective parameter value of a respective clock parameter of the one or more clock paramaters represented by the clock data of the extended first GNSS navigation data and a respective parameter value of the respective clock parameter of the one or more clock paramaters represented by the clock data of the second GNSS navigation data is equal to or exceeds respective predetermined threshold defined for this respective clock parameter.

Otherwise, the second GNSS navigation data may be determined to be not potentially manipulated in step 304.

It is to be understood that the thresholds are defined such that they take into account uncertainties associated with the GNSS navigation data extension algorithm and/or the extension time period (e.g. the duration of the extension time period). For different GNSS navigation data extension algorithms and/or different extension time periods, different predetermined thresholds may be defined. The predetermined thresholds or threshold data representing the predetermined thresholds may be stored in program memory 201.

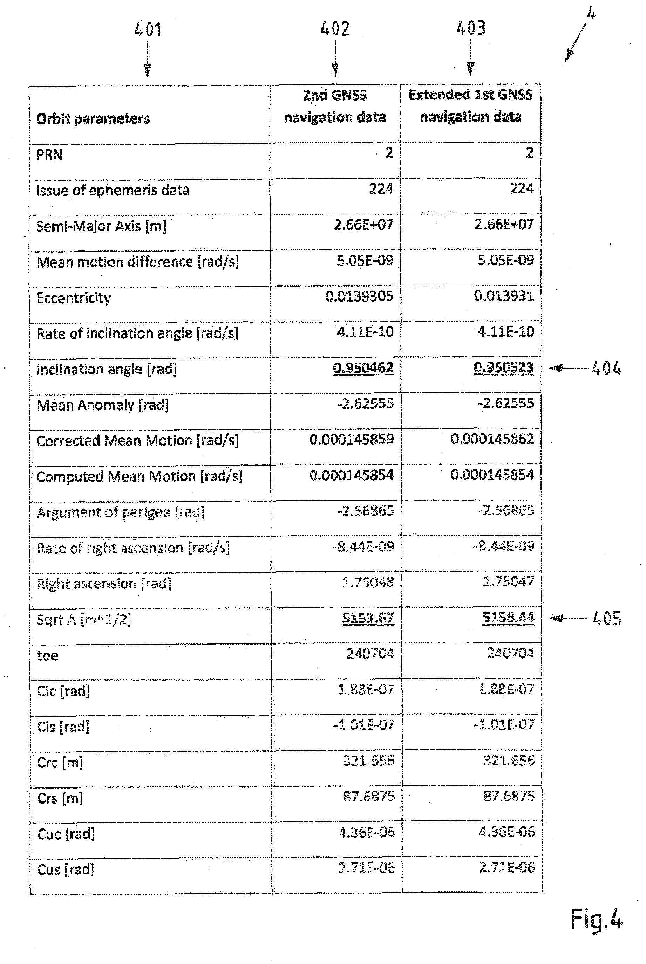

Fig. 4 shows a table 4 representing exemplary orbit parameters in column 401 and exemplary parameter values of these exemplary orbit parameters in columns 402 and 403. As apparent from Fig. 4, the exemplary parameter values of column 402 are examples of parameter values represented by ephemeris data of GNSS satellite 101 contained by the second GNSS navigation data and the exemplary parameter values of column 403 are examples of parameter values represented by ephemeris data of GNSS satellite 101 contained by the extended first GNSS navigation data. Parameter values between which a difference exists that may be determined to exceed a respective predetermined threshold defined for the respective orbit parameter are the underlined parameter values in rows 404 and 405. Accordingly, it may be determined in step 304 that the second GNSS navigation data as at least partially represented in column 402 are potentially manipulated.

As disclosed above in more detail, if it is determined in step 304 that the second GNSS navigation data received in step 303 are potentially manipulated, the second GNSS navigation data may for example be identified as potentially manipulated or may be rejected.

If it is however determined in step 304 that the second GNSS navigation data received in step 304 are trustworthy (i.e. not potentially manipulated), they may be used for estimating a position of mobile device.

Mobile device 2 is thus enabled to identify the second GNSS navigation data received in step 303 as potentially manipulated or as trustworthy (i.e. to be not potentially manipulated) at least partially based on the first GNSS navigation data previously received in step 301 by comparing the second GNSS navigation data with the extended first GNSS navigation data determined in step 302 at least partially based on the first GNSS navigation data. As disclosed above, the first GNSS navigation data and the extended first GNSS navigatoin data may be considered as trustworthy (i.e. to be not potentially manipulated). Since GNSS navigation data extension algorithms typically introduce inaccuracies, the use of the second GNSS navigation data for estimating a position of mobile device 2 in the second time period if the second GNSS navigation data are determined to be trustworthy is however preferrable over the use of the extended first GNSS navigation data for estimating a position of mobile device 2 in the extension time period. A particular adavantage of this solution is that it may be performed locally by mobile device 2 even if the first time period has lapsed and the first GNSS navigation data are not valid so that there is no need for real-time communication with server 109.

It is to be understood that the orders of the steps of flowchart 3 is only exemplary and that the steps may also have a different order if possible. For example, step 303 may be performed before step 302. Furthermore, it is also possible that two or more steps may be performed in one step.

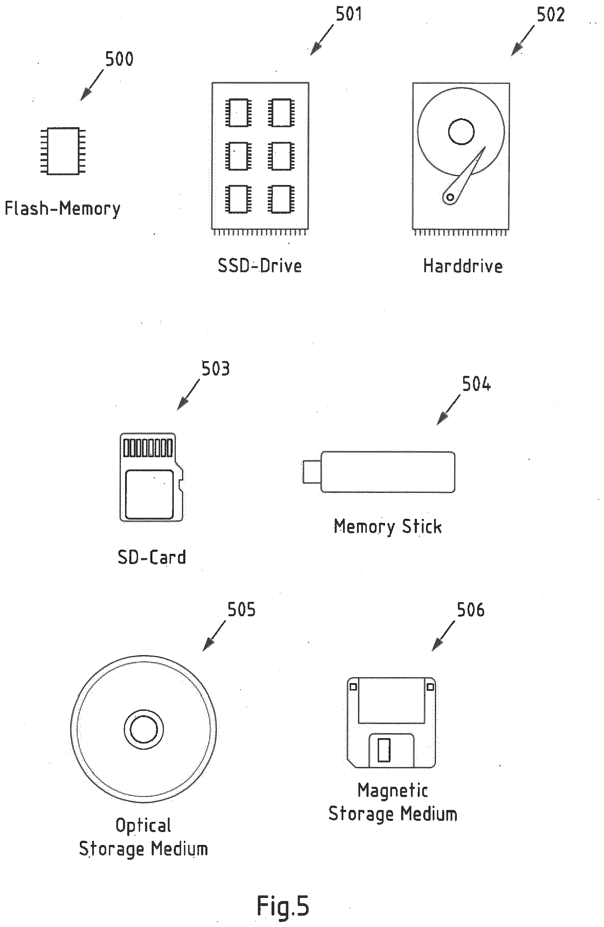

Fig. 5 is a schematic illustration of examples of tangible and non-transitory computer-readable storage media according to the present invention that may for instance be used to implement memory 201 of Fig. 2. To this end, Fig. 5 displays a flash memory 500, which may for instance be soldered or bonded to a printed circuit board, a solid-state drive 501 comprising a plurality of memory chips (e.g. Flash memory chips), a magnetic hard drive 502, a Secure Digital (SD) card 503, a Universal Serial Bus (USB) memory stick 504, an optical storage medium 505 (such as for instance a CD-ROM or DVD) and a magnetic storage medium 506.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile device, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method performed by a mobile device (2), said method comprising:
- receiving (301) first GNSS navigation data containing at least one of ephemeris data of at least one GNSS satellite (101-104) and clock data of said at least one GNSS satellite (101-104) for a first time period;
- determining (302) extended first GNSS navigation data at least partially based on said first GNSS navigation data, wherein said extended first GNSS navigation data contain at least one of ephemeris data of said at least one GNSS satellite (101-104) and clock data of said at least one GNSS satellite (101-104) for an extension time period;
- receiving (303) second GNSS navigation data containing at least one of ephemeris data of said at least one GNSS satellite (101-104) and clock data of said at least one GNSS satellite (101-104) for a second time period;
- determining (304), at least partially based on said extended first GNSS navigation data, whether or not said second GNSS navigation data are potentially manipulated.

2. The method according to claim 1, wherein said GNSS navigation data are determined to be potentially manipulated or to be not potentially manipulated at least partially by at least one of:
- comparing said extended first GNSS navigation data and said second GNSS navigation data;
- determining one or more differences between said extended first GNSS navigation data and said second GNSS navigation data.

3. The method accoding to any of claims 1 and 2, wherein each of said ephemeris data of said first GNSS navigation data, said ephemeris data of said extended first GNSS navigation data and said ephemeris data of said second GNSS navigation data represent one or more respective parameters values (402, 403) of one or more orbit paramaters (401) enabling determining an orbital position of said at least one GNSS satellite (101-104) at a given time in said respective time period of said first time period, said extension time period and said second time period.

4. The method according to claim 3, wherein said second GNSS navigation data are determined to be potentially manipulated if one or more differences between a respective parameter value of a respective orbit parameter of said one or more orbit paramaters (401) represented by said ephemeris data of said extended first GNSS navigation data and a respective parameter value of said respective orbit parameter of said one or more orbit paramaters (401) represented by said ephemeris data of said second GNSS navigation data is equal to or exceeds a predetermined threshold.

5. The method accoding to any of claims 1 to 4, wherein each of said clock data of said first GNSS navigation data, said clock data of said extended first GNSS navigation data and said clock data of said second GNSS navigation data represent one or more respective parameter values of one or more clock paramaters enabling determining a deviation of a clock of said at least one GNSS satellite (101-104) from a GNSS system time at a given time in said respective time period of said first time period, said extension time period and said second time period.

6. The method according to claim 5, wherein said second GNSS navigation data are determined to be potentially manipulated if one or more differences between a respective parameter value of a respective clock parameter of said one or more clock paramaters represented by said clock data of said extended first GNSS navigation data and a respective parameter value of said respective clock parameter of said one or more clock paramaters represented by said clocks data of said second GNSS navigation data is equal to or exceeds a predetermined threshold.

7. The method according to any of claims 1 to 6, said method further comprising one or more of the following steps, if it is determined that said second GNSS navigation data are potentially manipulated:
- identifying or causing of identifying said second GNSS navigation data as potentially manipulated;
- rejecting said second GNSS navigation data;
- if a position of said mobile device is estimated at least partially based on said second GNSS navigation data, identifying said position estimate as potentially manipulated;
- associating said second GNSS navigation data with a manipulation risk level.

8. The method according to any of claims 1 to 7, wherein said first GNSS navigation data are received from a server, and/or wherein said second GNSS navigation data are received from a GNSS satellite (101-104).

9. The method according to any of claims 1 to 8, wherein each GNSS satellite (101-104) of a GNSS system periodically broadcasts respective GNSS navigation data.

10. The method according to any of claims 1 to 9, wherein at least one of said first GNSS navigation data and said second GNSS navigation data are received via a wireless communication path.

11. The method according to any of claims 1 to 10, said method further comprising:
- observing one or more GNSS signals (105-108) at a position of said mobile device (2);
- estimating said position of said mobile device (2) at least partially based on said GNSS signals (105-108) and said second GNSS navigation data.

12. A computer program code, the computer program code when executed by a processor causing an apparatus to perform the method according to any of claims 1 to 11.

13. An apparatus, the apparatus comprising means for performing the method according to any of claims 1 to 11.

14. The apparatus according to claim 13, wherein the apparatus is a mobile device (2) or a module for a mobile device (2).
